**Europäisches Patentamt**

**European Patent Office**

**Office européen des brevets**

(19)

(11) Publication number: **0 146 186**
**B1**

(12) ## EUROPEAN PATENT SPECIFICATION

(45) Date of publication of patent specification: **25.03.87**

(51) Int. Cl.⁴: **B 60 R 13/06, B 60 J 5/04**

(21) Application number: **84201820.2**

(22) Date of filing: **08.12.84**

(54) Seal for motor vehicle doors.

(30) Priority: **14.12.83 IT 5403983 u**

(43) Date of publication of application:
**26.06.85 Bulletin 85/26**

(45) Publication of the grant of the patent:
**25.03.87 Bulletin 87/13**

(84) Designated Contracting States:
**DE FR GB IT SE**

(56) References cited:
**EP-A-0 021 069**
**EP-A-0 099 451**
**EP-A-0 109 058**
**DE-A-3 020 709**
**DE-A-3 210 468**
**FR-A-2 419 190**
**GB-A-1 577 312**
**US-A-3 145 434**

(73) Proprietor: **S.I.R.P. STUDI INDUSTRIALI**
**REALIZZAZIONE PROTOTIPI S.p.A.**
**Via A.Grandi 11**
**I-10024 Moncalieri (Torino) (IT)**

(72) Inventor: **Mantovani, Aldo**
**Via A. Grandi, 11**
**I-10024 Moncalieri (Torino) (IT)**

(74) Representative: **Lotti, Giorgio**
**c/o Ing. Barzano' & Zanardo S.p.A. Via Cernaia**
**20**
**I-10122 Torino (IT)**

Courier Press, Leamington Spa, England.

## Description

The present application relates to a seal assembly having the following fuctions: box-shaping structural element of the door structure, glass guiding and retaining structure, water-proof seal, and closure of the slit between the door and the body in the windowed region of the motor vehicle door, in particular in its perimetral inner and outer edges, respectively.

It is known that the performance of the said functions is carried out generally by various and individual seal and by plate members having different configurations relative to each other; so that, in addition to the already considerable constructive difficulties, there are also difficulties connected with their assembly onto the door, to the prejudice of the cycle of production of the door itself, and in particular the forming of its framework, the obtainment of its outer coating, the application of accessory parts, such as handles, window regulator, inner door lock control lever, as well as the insertion of the window run channel for the sliding movement of the respective window.

This latter member, generally made of metal, in addition to the disadvantages mentioned hereinabove, gives rise also to working and assembly difficulties, generating as well as sensible and prejudicial axial deviation degree relative to outer contour of the vehicle body, with evident aerodynamic anomaly and hence increase of the known penetration coefficient of the vehicle.

The object of the invention is to obviate said disadvantages, by eliminating the window run channel and making recourse to a new technical solution comprising, first of all, a single integral seal which, thanks to the direct incorporation thereinto of sectors having a graduated elasticity and a suitable structuration, accomplishes the functions conventionally performed by the individual units of the known seals and joined plates.

In addition to the evident and useful weight and size reduction, as well as the elimination of the metal material scrap, by applying the present invention, a simplified and rapid construction of the seal and the respective snap-assembly are obtained, thus employing a shorter time for the assembly cycle.

Moreover, in this manner a product is obtained which possesses a fully reliable efficiency during the whole period of its activity, thereby obtaining from all this an evident economical benefit, such as the reduction of the costs from the beginning of the manufacture, which costs therefore become commercially more competitive.

In order to attain all these objects and advantages, as well as those which will be apparent from the following detailed description, there is provided a seal assembly for motor vehicle doors, of the type comprising a seal applied on a frame of the door window, characterized in that the frame has an open cross-section with outwardly turned edges having the seal applied between them and extending in a substantially U-shaped configuration to form the guide means for guiding the glass, the said seal being provided with a stiffening core and with sealing appendixes for the glass and for sealing the window frame to the body of the vehicle.

A practical and preferred technical solution of the invention will now be described by way of a non limiting example and with reference to the annexed drawing, in which:

FIGURE 1 is a frontal and exploded perspective view of the motor vehicle door incorporating in its upper portion the seal assembly according to the invention;

FIGURE 2 is a partial sectional view along line II—II of Figure 1;

FIGURE 3 is a partial sectional view along line III—III of Figure 1;

FIGURE 4 is a frontal sectional view of the seal, shown not in its assembled condition i.e. without the respective contact deformations.

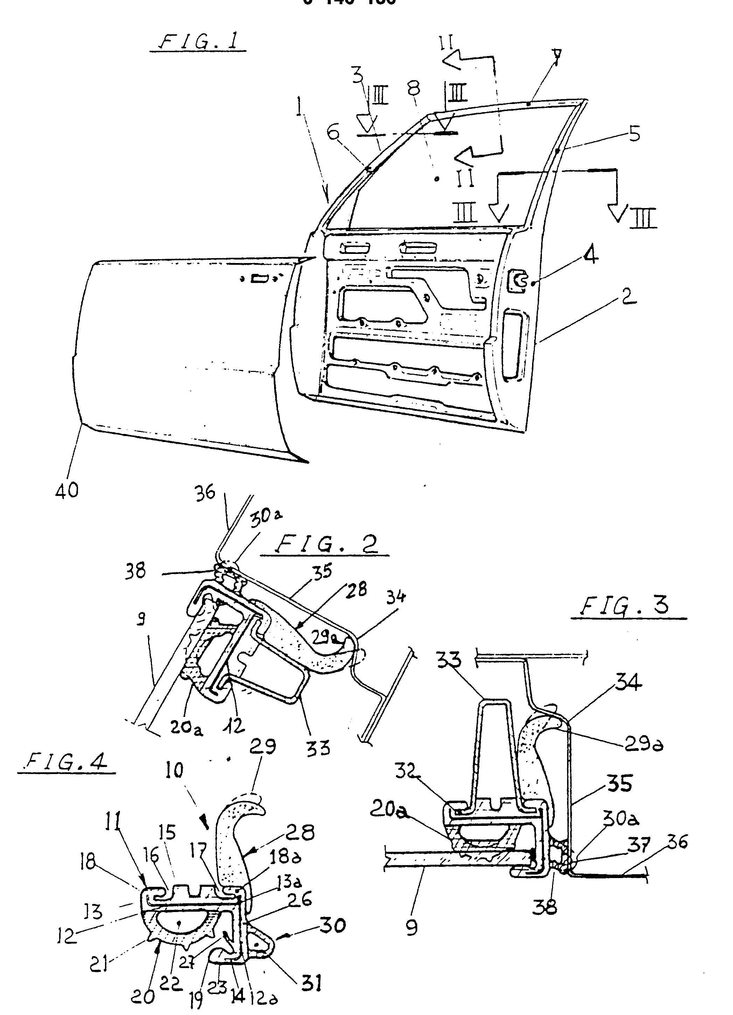

Referring to said Figures, reference numeral 1 indicates generally the door of a motor vehicle, comprising in the known manner a lower and upper portion 2, 3 respectively, of its frame 4, the portion 3 resulting in being basically formed by the pair of spaced pillars 5—6, which are in their turn connected to one another by the cross member 7, the whole being apt to define the space 8, in which the conventional glass 9 carries out its vertical movement of translation (see Figure 1).

Developed in its position along the perimeter generated by the space 8, i.e. on the outer framework of the door 1, is the seal indicated generally by reference numeral 10, made of an elastomeric material and having a continuous and uniform profile, as can be seen from the graph concerning the mutual identity of the two sectional views.

Said seal 10 which, in accordance with the specific inventive characteristic, is monolithic in its structure, comprises a central support nucleus 11 made of hardened rubber, geometrically profiled to an approximately U-shaped configuration, upon previous insertion of a reinforcing and angularly shaped metallic insert 12—12a of reduced thickness and with turned appendixes indicated by reference numerals 13—13a—14.

As regards still the profiled element 11, its upper branch 15 includes the recesses indicated by reference numerals 16 and 17, in the respective ends, whereas its turned edges 18—18a—19 are bent outwardly with the corresponding inner metal elements 13—13a—14 mentioned hereinabove.

Extending from the inner side of the branch 15 is the arcuated sector 20, provided with outer pointed contact appendixes 21 circumferentially spaced from each other, and made of soft rubber, whose functional deformative softness is enhanced also by its inner cavity 22.

Again, in the central U-shaped nucleus 11, the longitudinal and spaced branches 15 and 23 are connected in a continuous manner by the radial branch 26 which includes internally an oscillating appendix 27 also made of soft rubber, whereas extending from above the whole is the sector 28, made of closed cell polyprene and provided with a lip-shaped tapered and resiliently oscillating end 29.

Positioned below said sector 28 is the further sector 30 made of soft rubber, whose softness characteristic is enhanced by its inner cavity 31 (see Figures 2 and 4).

The described parts forming the integral seal usefully accomplished the individual operative functions, as follows.

The metal core 12 with the respective turned end parts 13—13a, together with the outer turned parts 15—18—18a made of hardened rubber, forms a valid box shaping structural element of the upper portion 3 formed in the frame 4 of the door 1.

The turned parts 18 and 18a of the hardened elastomeric branch 15 ensure, during the assembly, the positioning of the seal 10, by engaging in its recesses 16 and 17 the turned ends 32 of the metal structure 33 of the door.

The central nucleus 11, still together with its metal core 12—12a—14, forms in its interior a valid guiding and retaining element during translation and, consequently, during the lifting and setting of the glass 9 for which cooperates also, under resilient deformation, the soft rubber sector 20 with its outer appendixes 21, thereby reaching the position 20a (see Figure 3), and whose dust-proof condition is ensured by the radial branch 26 together with the oscillating appendix 27 which guides and retains in position the glass.

The water-proof condition beteen the door 1 and the vehicle body is efficiently ensured by the upper polyprene sector 28, whose end 29 forming an oscillating lip 29a efficaciously contacts the portion 34 of the vehicle body 35 (see Figure 3).

The closure of the slit between the door and the outer sector 36 of the vehicle body is effectively obtained by the soft rubber part 30, operatively deformed at 30a, which in particular, by being resiliently squashed, results in being irremovably positioned between the outer portion 37 of the body 35 and the outer edge 38 of the door 1, thus originating a positive reduction of the noise and a valuable optimal aerodynamic profile, as well as a protection against penetration of dust. From what has been illustrated hereinabove, besides the mentioned advantages it is also apparent that with the present seal a new and economical technical solution is obtained for the assembly of the door with its components, which technical solution may be completed by an outer leather coating 40 applied in an aesthetical manner onto the inner lower part 2 of the door frame 4, all this being achieved with an evident further productive increment.

## Claims

1. A seal assembly for motor vehicle doors, of the type comprising a seal (1D) applied on a frame (33) of the door window, characterized in that the frame (33) has an open cross-section with outwardly turned edges (32) having the seal (10) applied between them and extending in a substantially U-shaped configuration to form the guide means for guiding the glass (9), the said seal being provided with stiffening core (12, 12a) and with sealing appendixes (19, 20; 28, 30) for the glass and for sealing the window frame to the body (35) of the vehicle.

2. A seal assembly for motor vehicle doors according to Claim 1, characterized in that the seal is provided with turned edges (18, 18a) engaging around the outwardly turned edges (32) of the frame (33), during their snap coupling movement.

3. A seal assembly for motor vehicle doors according to Claim 1, characterized in that the glass sealing appendix (20) is substantially hollow and arcuated in shape and is rigidly connected, at its ends, to the seal section (15) snap-couled with the frame.

4. A seal assembly for motor vehicle doors according to Claim 1, characterized in that the appendixes (28, 30) which provide the sealed conditon between the door (1) and the body (35) of the vehicle, are rigidly connected to the seal outwards thereof and provide respective seals extending internally and flush with the profile of the vehicle.

## Patentansprüche

1. Dichtungseinheit für Motorfahrzeugtüren, der Art, die eine auf einem Rahmen (33) des Türenfensters angebrachte Dichtung umfasst, dadurch gekennzeichnet, dass der Rahmen einen offenen Querschnitt mit nach aussen gebogenen Enden (32) aufweist, zwischen denen die Dichtung (10) angeordnet ist und eine im wensentlichen U-förmige Gestaltung annimmt, um die Führungsmittel zur Führung de Fensterscheibe zu schaffen, wobei die Dichtung mit einem Versteifungskern (12, 12a) und Abdichtungsansätzen (19, 20; 28, 30) für die Fensterscheibe und zur Abdichtung gegen den Fahrzeugaufbau (35) versehen ist.

2. Dichtungseinheit für Motorfahrzeugtüren nach Anspruch 1, dadurch gekennzeichnet, dass die Dichtung umgebogene Enden (18, 18a) aufweist, die sich um die nach aussen umgebogene Enden (32) des Rahmens (33) herum, während deren Schnappkupplungsbewegung, ankuppeln.

3. Dichtungseinheit für Motorfahrzeugtüren nach Anspruch 1, dadurch gekennzeichnet, dass der Abdichtungsansatz (20) im wesentliche hohl und bogenförmig ausgebildet und, an seinen Enden, mit dem an den Rahmen schnappweise angekuppelten Dichtungsabschnitt (15) steif verbunden ist.

4. Dichtungseinheit für Motorfahrzeugtüren nach Anspruch 1, dadurch gekennzeichnet, dass die den Abdichtungszustand zwischen der Tür (1) und dem Aufbau (35) des Fahrzeugs bewirkende Abdichtungsansätze (28, 30) mit der Dichtung, ausserhalb derselben, steif verbunden sind und entsprechende sich im innern und fluchtrecht mit dem Profil des Fahrzeugs-erstreckende Dichtungenerstellen.

## Revendications

1. Garniture d'étanchéité pour portes de véhicules automobiles, du genre comprenant un joint d'étanchéité (10) appliqué sur un châssis (33) de fenêtre de porte, characterisée en ce que le châssis (33) possède un profil ouvert avec des rebords (32) tournés vers l'extérieur, le joint d'étanchéité (10) étant appliqué entre eux et ayant une configuration en forme générale de U pour constituer un moyen de guidage de la vitre (9), ledit joint d'etanchéité étant pourvu d'une armature de raidissage (12, 12a) et d'appendices d'étanchéité (19, 20, 28, 30) pour la vitre et pour assurer l'éntanchéité entre le châssis de fenêtre et la caisse (35) du véhicule.

2. Garniture d'étanchéité pour portes de véhicules automobiles, selon la revendication 1, caractérisée en ce que le joint d'étanchéité possède des rebords (18, 18a) enveloppant les rebords (32) tournés vers l'extérieur du châssis (33) pendant leur accouplement par encliquetage.

3. Garniture d'étanchéité pour portes de véhicules automobiles, selon la revendication 1, caractérisée en ce que l'appendice (20) d'étanchéité de vitre est sensiblement creux et de forme arrondie, et est relié fermement par ses extrémités à la partie (15) de joint encliquetée sur le bâti.

4. Garniture d'étanchéité pour portes de véhicules automobiles, selon la revendication 1, caractérisée en ce que les appendices (28, 30) qui assurent l'étanchéité entre la porte (1) et la caisse (35) du véhicule, sont reliés rigidement au joint d'étanchéité à l'extérieur de ce dernier et constituent des joints s'étendant respectivement à l'interieur et au ras du profil du véhicule.

0 146 186

FIG.1

FIG.2

FIG.3

FIG.4